# EUROPÄISCHE PATENTSCHRIFT

(11) **EP 2 782 969 B1**
(45) Veröffentlichungstag und Bekanntmachung des Hinweises auf die Patenterteilung: **07.10.2020**
(21) Anmeldenummer: 12790893.7
(22) Anmeldetag: 22.11.2012
(51) Int. Cl.: C09J 153/00, C09J 153/02, C09J 193/00, C09J 7/38, C08L 93/00, C08L 53/02, C08L 23/18

(54) **PSA ENTHALTEND OLEFINBLOCKCOPOLYMERE UND STYROLBLOCKCOPOLYMERE**
PSA CONTAINING OLEFIN BLOCK COPOLYMERS AND STYRENE BLOCK COPOLYMER
PSA CONTENANT DES COPOLYMÈRES BLOCS OLÉFINIQUES ET DES COPOLYMÈRES BLOCS STYRÉNIQUES

(30) Priorität: 22.11.2011 DE 102011086845
(43) Veröffentlichungstag der Anmeldung: 01.10.2014
(73) Patentinhaber: Henkel AG & Co. KGaA, 40589 Düsseldorf (DE)
(72) Erfinder: PÜRKNER, Eckhard, 40595 Düsseldorf (DE); SEILER, Annie, F-51150 Juvigny sur Marne (FR)
(86) Internationale Anmeldenummer: PCT/EP2012/073293
(87) Internationale Veröffentlichungsnummer: WO 2013/076175

(56) Entgegenhaltungen:
- WO-A2-2011/022523
- JP-A- 2009 185 122
- US-B1- 7 199 180

## Beschreibung

Die Erfindung betrifft Schmelzklebstoffe hergestellt auf Basis von Olefinblockcopolymeren und Styrolblockcopolymeren, die zusammen mit weiteren Zusatzstoffen als Haftschmelzklebstoff geeignet sind.

Schmelzklebstoffe, die zum Verkleben von verschiedensten Materialien geeignet sind, sind allgemein bekannt. In der EP 0912646 werden Schmelzklebstoffe beschrieben, die aus einem im wesentlichen lineares Copolymer aus Ethylen zusammen mit mindestens einem C₃ bis C₂₀-α-Olefinmonomeren hergestellt werden. Auch in der WO 00/00565 werden Schmelzklebstoffe, die auf Basis von linearen Ethylen-α-Olefin-Copolymeren hergestellt werden. Es werden dort die üblichen Zusatzkomponenten beschrieben, z.B. klebrigmachende Harze, Wachse, weitere unterschiedliche Polymere, Styrolblockcopolymere, Weichmacher oder andere Additive. Als Verwendungszweck wird das Verkleben von Papier und Pappmaterialien beschrieben sowie eine Verwendung als Klebeband oder zum Buchbinden. Olefinische Blockcopolymere werden nicht beschrieben.

In der WO 2006/102150 werden Klebstoffe auf Basis ausgewählter C₂- α-Olefin Copolymeren beschrieben. Diese Copolymere und ihre Herstellung werden beispielsweise auch in der WO 2005/090426 beschrieben. Dabei werden spezielle Katalysatoren bzw. Überträgerverbindungen erwähnt. Es werden neben anderen Produkten auch Klebstoffe beschrieben. Dabei ist aber festzustellen, dass die Zusammensetzung der Bestandteile der Klebstoffe, ihre Eigenschaften und ihre speziellen Anwendungen nur in Form von Listen, Aufzählungen und aufgabenhaft aufgeführt werden. Eine klare Offenbarung von besonderen Klebstoffzusammensetzungen ist nicht gegeben. Es werden verschiedene allgemeine Eigenschaften beschrieben, insbesondere die Viskosität.

In der WO 2005/028584 werden Schmelzklebstoffe beschrieben, enthaltend Polyolefinpolymere hergestellt über Metallocene-Katalyse. Diese Polymere sollen eine Viskosität bis zu 9000 mPas aufweisen bei einer Temperatur von 149°C, der Schmelzklebstoff selbst eine Viskosität unterhalb 2000 mPas.

In der US 2008/0281037 werden Polymer und Schmelzklebstoffe beschrieben, unter anderem auch über metallocene-Katalyse hergestellte Olefinblockcopolymere. Es werden keine Gemische mit Styrolblockcopolymeren beschrieben.

WO 2011/022523 A2 offenbart einen Heißschmelzklebstoff mit niedriger Auftragstemperatur, basierend auf Olefincopolymere. US 7199180 B1 offenbart Klebstoffe und Verfahren zu deren Herstellung, umfassend mindestens ein erstes homogenes Ethylene/α-olefin-Interpolymer und gegebenenfalls, Klebrigmacher und Weichmacher. JP 2009185122 A offenbart Propylenharz-Zusammensetzungen, die ausgezeichnete mechanishe Festigkeiteigenschaften und Formbarkeit aufweisen.

Aus den bekannten Olefincopolymeren können Schmelzklebstoffe hergestellt werden. Dabei können die Olefincopolymere in weiten Grenzen variiert werden. Styrolblockcopolymere sind ebenfalls kommerziell weit verfügbar. Sie können in einem weiten Eigenschaftsspektrum hergestellt werden, insbesondere sind es elastische Polymere. Es hat sich jedoch gezeigt, dass Olefincopolymere nicht ausreichend mit Styrolblockcopolymeren verträglich sind. Das führt in der Praxis dazu, dass Klebstoffe aus solchen Gemischen nicht lagerstabil sind oder bei Applikation in der Schmelze. Dabei können sich die Polymere teilweise entmischen, dann sind diese nicht applizierbar, oder an die Oberfläche migrieren und so die Haftung auf den Substraten nachträglich verringern. Das führt dazu, dass solche Mischungen nicht als permanent klebriger Haftschmelzklebstoff geeignet sind. Außerdem ist sicherzustellen, dass eine gute permanente Haftklebrigkeit besteht. Dabei ergeben einige Styrolblockcopolymere nicht klebrige Oberflächen. Wird die Klebrigkeit beispielsweise durch Weichmacher erhöht, wird die Kohäsion reduziert, sodass eine Klebstoffschicht reißt und die Verklebung versagt.

Aufgabe der vorliegenden Erfindung ist es deswegen Schmelzklebstoffe zur Verfügung zu stellen, die aus einer Mischung von Olefinblockcopolymeren und Styrolblockcopolymeren bestehen. Die Schmelzklebstoffe sollen eine geeignete Viskosität zeigen, um eine Applikation in dünner Schicht und auf temperaturempfindlichen Substraten zu ermöglichen. Die erhaltenen Schichten sollen haftklebrige Eigenschaften zeigen, die durch Lagerung des Klebstoffs nicht beeinträchtigt werden. Dabei sollen die Klebstoffschichten ein gutes elastisches Verhalten in der Verklebung zeigen.

Die Aufgabe wird gelöst durch einen Schmelzklebstoff enthaltend (i) 15 bis 70 Gew.-% eines Gemisches aus mindestens einem Copolymeren auf Basis von Ethylen und/oder Propylen und mindestens einem C4 bis C20-α-Olefin, das durch Metallocene-katalysierte Polymerisation als Blockcopolymer erhältlich ist und mindestens einem Styrolblockcopolymeren, (ii) - 10 bis 70 Gew.-% mindestens eines klebrigmachenden Harzes, (iii) 0 bis 40 Gew.-% weitere Additive und Weichmacher, wobei die Summe der %- Anteile 100% ergeben soll und das klebrigmachende Harz ganz oder teilweise ein Weichharz ist, das bei einer Temperatur unter 50°C flüssig ist.

Ein weiterer Gegenstand der Erfindung ist die Verwendung solcher Schmelzklebstoffen zum Beschichten von Folien, Bändern, Etiketten und anderen flachen Substarten zum Erzeugen einer haftklebrigen Schicht. Ein weiterer Gegenstand der Erfindung sind Folien, Klebebänder und Etiketten, die auf mindestens einer Seite eine haftklebrige Schicht aus einem erfindungsgemäßen Klebstoff aufweisen.

Ein notwendiger Bestandteil des erfindungsgemäßen Haftschmelzklebstoffs sind Olefin-Copolymeren auf Basis von Ethylen und/oder Propylen und mindestens einem C4 bis C20-α-Olefinen. Diese Polyolefine werden über Metallocen-Katalyse hergestellt. Eine Ausführungsform der Erfindung verwendet solche Co- oder Terpolymere auf Basis von Ethylen zusammen C4 bis C20 -α-Olefinen. Bei den Monomeren, die zusätzlich zu Ethylen oder Propylen eingesetzt werden können, handelt es sich um die bekannten mit Ethylen oder Propylen copolymerisierbaren olefinisch ungesättigte Monomere. Insbesondere handelt es sich um lineare oder verzweigte C4 bis C20 -α-Olefine, wie Buten, Hexen, Methylpenten, Octen; cyclisch ungesättigte Verbindungen wie Norbonen oder Norbonadien; symmetrisch oder unsymmetrisch substituierte Ethylen-Derivate, wobei als Substituenten C1 bis C12 -Alkylreste geeignet sind; sowie ggf. ungesättigte Carbonsäuren oder Carbonsäureanhydride. Es kann sich dabei um Homopolymere, Copolymere, Terpolymere handeln, die auch weitere Monomere enthalten können. Im folgenden sollen unter Copolymere auch solche Polymere aus mehr als 2 Monomeren verstanden werden. Dabei soll bevorzugt die Menge der α-Olefin- Comonomere unterhalb 20 % betragen.

Eine andere Ausführungsform enthält Copolymere auf Basis von Ethylen und Propylen. Gegebenenfalls ist es möglich, dass auch zusätzliche geringe Anteile an C4 bis C20 -α-Olefinen enthalten sind. Diese werden ebenso über Metallocene-Katalysatoren hergestellt. Dabei soll die Menge des Propylen über 60 Gew.-% betragen, insbesondere liegt der Anteil an Propylen über 70 Gew.-%. Es können gegebenen falls noch geringe Anteile an anderen α-Olefinmonomeren enthalten sein, die Menge soll weniger als 5 % betragen, insbesondere sind jedoch Ethylen/Propylen-Blockcopolymere geeignet.

Die so erhaltenen (Co)polymere weisen ein Molekulargewicht von 2000 bis zu 250000 g/mol auf, insbesondere von 5000 bis zu 100000 g/mol (Molekulargewicht als Zahlenmittel, M_{N}, bestimmt über GPC). Diese (Co)polymere zeichnen sich dadurch aus, dass sie eine enge Molekulargewichtsverteilung aufweisen. Die Molekulargewichtsverteilung ausgedrückt als M_{W}/M_{N} soll beispielsweise bis 2,5 betragen, insbesondere unter 2,3. Solche Polymere sind in der Literatur bekannt und können von verschiedenen Herstellern kommerziell erhalten werden. Beispielsweise sind geeignete Polymere unter dem Handelsnamen Vistamax ® oder Infuse ® kommerziell erhältlich.

Es handelt sich bei den erfindungsgemäß geeigneten Copolymeren um Blockcopolymere. Dabei weisen die Blöcke eine unterschiedliche Zusammensetzung der Monomeren auf. In einer Ausführungsform weisen die erfindungsgemäß geeigneten Schmelzklebstoffe eine Glasübergangstemperatur auf, in einer anderen Ausführungsform sollen die Copolymere zwei Glasübergangstemperaturen aufweisen. Die erste Glasübergangstemperatur (Tg) (gemessen über DTA) soll im Bereich zwischen -100 bis 0°C liegen, insbesondere zwischen -80 bis -10°C. Die zweite Glastemperatur soll insbesondere unterhalb von -100°C liegen.

Insbesondere sind solche olefinischen Blockcopolymere geeignet, die durch Katalyse mit Metallocen-Verbindungen hergestellt werden. Der Schmelzindex dieser Polymere soll von 5 g/10 min bis 200 g/10 min betragen, bevorzugt bis 100 g/10 min (gemessen bei 190 °C, 2,16 kg, DIN ISO 1133). Der Erweichungspunkt der Polymere soll oberhalb von 130°C liegen, insbesondere oberhalb von 160°C. Die Menge dieser Copolymere soll 5 bis 50 Gew.-% bezogen auf dem Schmelzklebstoff betragen, insbesondere zwischen 15 bis 30 Gew.-%. Bei den (Co)polymer kann es sich um ein Polymer handeln, es ist jedoch auch möglich, dass ein Gemisch eingesetzt wird.

Als weiteren Bestandteil muss ein erfindungsgemäßer Haftschmelzklebstoff (PSA) mindestens ein thermoplastisches elastisches Styrolblockcopolymer enthalten. Es handelt sich dabei bevorzugt um Triblockcopolymere, es können aber auch Diblockcopolymere eingesetzt werden oder auch Mischungen beider Typen. Solche Blockcopolymere sind schlecht verträglich mit den Olefinblockcopolymeren.

Es kann sich um verschieden Typen von Styrolblockcopolymeren handeln. Beispiele dafür sind Styrol-Isopren-Blockcopolymere (SIS), Styrol-Isopren-Butadien-Blockcopolymere (SIBS), Styrol-Butadien-Blockcopolymere (SBS), hydrierte Formen der Copolymere, wie SBBS, SEBS, SEPS, SIPS oder deren Mischungen, sowie entsprechende Diblockcopolymere. Solche Polymere sind dem Fachmann bekannt und kommerziell erhältlich. Sie weisen ein Molekulargewicht (M_{N}) von 10000 bis 500000 g/mol auf, insbesondere 70000 bis 300000g/mol. Insbesondere sind nicht hydrierte Formen bevorzugt.

Die Menge der zusätzlich zu den Olefinblockcopolymeren enthaltenen Styrolblockcopolymeren beträgt von 3 bis 35 Gew.%, insbesondere von 5 bis 25 Gew.-%, bezogen auf den Schmelzklebstoff. Durch die Menge dieser Blockcopolymeren wird die Elastizität des Klebstoffs beeinflusst. Sind die Mengen der Blockcopolymeren zu hoch, ist der Klebstoff zu elastisch und kann schlecht verarbeitet werden. Außerdem werden verstärkt Unverträglichkeiten beobachtet, die zu schlechten Klebstoffeigenschaften führen. Ist die Menge zu gering, wird die Kohäsion einer Klebstoffschicht vermindert.

Als weiteren Bestandteil enthält der erfindungsgemäße Haftschmelzklebstoff mindestens ein klebrigmachendes Harz. Das Harz bewirkt eine zusätzliche Klebrigkeit des Klebstoffs. Es wird in einer Menge von 10 bis 70 Gew.-%, bevorzugt 10 bis 40 Gew.-%, eingesetzt. Erfindungsgemäß ist es notwendig, dass die Harze mindestens anteilig ein Weichharz enthalten, das unter 50°C flüssig oder fließfähig ist. Das kann über die Tropftemperatur bestimmt werden. Harze können dabei ausgewählt werden aus aromatischen, aliphatischen oder cycloaliphatischen Kohlenwasserstoff-Harzen, sowie modifizierte oder hydrierte Derivate. Weitere im Rahmen der Erfindung einsetzbaren Harze sind Polyterpenharze, phenolisch oder aromatisch modifizierte Polyterpenharze, modifizierte Naturharze wie Harzsäuren aus Balsamharz, Tallharz oder Wurzelharz, ggf. auch Hydroabietylalkohol und dessen Ester, Acrylsäure-Copolymerisate, wie Styrol-Acrylsäure-Copolymere und Harze auf Basis funktioneller Kohlenwasserstoffharze.

Übliche Harze besitzen ein niedriges Molekulargewicht von unterhalb 2000 g/mol, insbesondere unterhalb von 1500 g/mol. Sie können chemisch inert sein oder sie können gegebenenfalls noch funktionelle Gruppen enthalten, wie beispielsweise OH-Gruppen, Carboxylgruppen oder Doppelbindungen. Erfindungsgemäß sollen dabei Weichharze ausgewählt werden, die eine Tropftemperatur unter 50°C aufweisen, insbesondere unter 35°C (Mettler-Tropfpunkt nach ASTM D-3104). Als zusätzliche Harze können dabei auch solche Harze zugesetzt werden, die einen Erweichungspunkt zwischen 70 und 130°C (Ring-Ball-Methode, DIN 52011) besitzen. Bevorzugt ist es Kolophoniumharze und insbesondere voll- oder teilhydrierte Kohlenwasserstoffharze einzusetzen. Dabei kann die Menge der bei Raumtemperatur festen Harze bis zu 50% der gesamten Harzmenge betragen.

Weichmacher werden vorzugsweise zum Einstellen der Viskosität oder der Flexibilität verwendet und sind im allgemeinen in einer Konzentration von 0 - 25 Gew.%, vorzugsweise von 2 - 15 Gew.% enthalten. Geeignete unpolare Weichmacher umfassen synthetische Öle, paraffinische Öle, naphthenische Öle oder Polyisobutylene. Es handelt sich beispielsweise um medizinische Weißöle, naphtenische Mineralöle, Polypropylen-, Polybuten-, Polyisopren-Oligomere, hydrierte Polyisopren- und/oder Polybutadien-Oligomere, paraffinischen Kohlenwasserstofföle.

Um einen hohe Klebrigkeit und eine gute Kohäsion zu erhalten ist es bevorzugt, dass die Summe aus Weichharz und Weichmacher von 10 bis 35 Gew.-% beträgt.

Als weitere Bestandteile sind in dem erfindungsgemäßen Schmelzhaftklebstoff Additive enthalten, die bestimmte Eigenschaften des Klebstoffs beeinflussen können, wie z. B. Kohäsionsfestigkeit, Viskosität, Erweichungspunkt oder Verarbeitungsviskosität. Darunter sind beispielsweise Stabilisatoren, Wachse, Haftvermittler, Antioxidantien, Lichtschutzmittel, Farbpigmente, Rheologiemittel oder ähnliche Zusatzstoffe zu verstehen. Die Menge soll bis zu 15 Gew. % betragen. Es können auch mehrere Additive als Gemisch eingesetzt werden. Weiterhin können Füllstoffe zur Festigkeitserhöhung eingesetzt werden. Zum Einstellen der Eigenschaften können auch noch geringe Mengen an Weichmachern als Glycerin-, Benzoat- oder Phthtalatester oder Polyglykolether zugesetzt werden.

Gegebenenfalls können dem Haftschmelzklebstoff Wachse in Mengen von 0 bis 5 Gew.-% zugegeben werden. Die Menge ist dabei so bemessen, dass einerseits die Viskosität eingestellt wird, andererseits aber die Adhäsion nicht negativ beeinflusst wird. Das Wachs kann natürlichen oder synthetischen Ursprungs sein. Als natürliche Wachse können pflanzliche Wachse, tierische Wachse, als synthetische Wachse können Mineralwachse oder petrochemische Wachse eingesetzt werden. Bevorzugt sollen Wachse aber nicht enthalten sein.

Eine weitere Gruppe von Additiven sind Stabilisatoren. Sie haben die Aufgabe, die Polymere während der Verarbeitung vor Zersetzung zu schützen. Hier sind insbesondere die Antioxidantien zu nennen. Sie werden üblicherweise in Mengen bis zu 3 Gew.-%, vorzugsweise in Mengen von etwa 0,1 bis 1,0 Gew.-% dem Schmelzhaftklebstoff beigefügt. Solche Additive sind dem Fachmann im Prinzip bekannt. Er kann eine Auswahl nach den erwünschten Eigenschaften des Schmelzklebstoffs treffen.

Darüber hinaus kann der erfindungsgemäße Haftschmelzklebstoff Haftvermittler enthalten. Haftvermittler sind Stoffe, die die Adhäsion des Schmelzklebstoffs zu dem zu verklebenden Substrat verbessern. Insbesondere sollen Haftvermittler das Alterungsverhalten von Klebungen unter Einfluss von feuchter Atmosphäre verbessern. Typische Haftvermittler sind zum Beispiel Ethylen/Acrylamid-Comonomere, polymere Isocyanate, reaktive siliciumorganische Verbindungen oder Phosphorderivate. Ebenso können die Benetzungseigenschaften des Klebstoffs und damit das Haftvermögen auf den Substraten beeinflusst werden.

Eine bevorzugt Ausführungsform des Haftschmelzklebstoffs enthält 15 bis 30 Gew.-% eines Blockcopolymeren auf Basis von Ethylen und/oder Propylen und gegebenenfalls mindestens einem C4 bis C20-α-Olefinen, das durch Metallocene-katalysierte Polymerisation erhältlich ist, und 5 bis 35 Gew.-% mindestens eines Styrolblockcopolymeren, 5 bis 35 Gew.-% mindestens eines klebrigmachenden Harzes, das unter 50 °C flüssig ist, 0 bis 25 Gew.-% eines unpolaren Weichmachers sowie 0 bis 15 Gew.-% weitere Additive, wobei die Summe der %-Anteile 100% ergeben soll.

Der erfindungsgemäße Haftschmelzklebstoff wird durch bekannte Verfahren durch Mischen in der Schmelze hergestellt. Dabei können alle Komponenten gleichzeitig vorgelegt, erwärmt und dann homogenisiert werden, oder es werden zuerst die leichter schmelzenden Komponenten vorgelegt und gemischt, danach die weiteren Harzbestandteile zugegeben. Es ist auch möglich, den Schmelzklebstoff kontinuierlich in einem Extruder herzustellen. Der geeignete Schmelzklebstoff ist fest und, bis auf Verunreinigungen, frei von Lösemitteln.

Der erfindungsgemäß geeignete Schmelzklebstoff soll eine Viskosität von 3000 bis 50000 mPas aufweisen, bevorzugt von 5000 bis 30000, insbesondere über 10000 mPas gemessen bei Applikationstemperatur. Diese liegt bei 150°C (Brookfield, EN ISO 2555, gemessen bei angegebener Temperatur).

Die erfindungsgemäßen Haftschmelzklebstoffe eignen sich zum Verbinden unterschiedlichster Materialien. So lassen sich Materialien wie Polyolefinfolien, beispielsweise Polyethylenfolien oder Polypropylenfolien, Polyolefinvliese, beispielsweise Polyethylenvliese oder Polypropylenvliese, Polyurethanfolien, Polyurethanschäume, Folien aus Cellulosederivaten, Folien aus Polyacrylaten oder Polymethacrylaten, Folien aus Polyester, insbesondere Polylactid, Polycaprolacton, Polyesteramid untereinander verbinden. Dabei werden die aufgeschmolzenen Klebstoff auf ein Substrat aufgetragen und danach mit einem zweiten Substrat verklebt.

Eine andere bevorzugte Ausführungsform trägt die erfindungsgemäßen Klebstoffe als Klebeschicht auf einen Träger auf. Bei den Trägern handelt es sich um die bekannten flexiblen Folien, die auch als Klebeband geeignet sind. Diese nicht klebrigen Folien werden an einer oder beiden Oberflächen mit einem erfindungsgemäßen Schmelzklebstoff beschichtet. Die Schichtdicke des aufgetragenen Klebstoffs beträgt beispielsweise von 50 bis 500 g/m2 (ca. 50 bis 500 µm). Insbesondere soll die Schichtdicke von 100 bis 350 g/m2 betragen.

Diese Klebstoffschichten weisen eine gute Haftung zu dem Trägermaterial auf. Solche Trägerfolien weisen üblicherweise eine anti-haft beschichtete Rückseite auf, die leicht von der Haftklebstoffschicht getrennt werden kann.

Eine spezielle Verwendungsform der erfindungsgemäßen Schmelzklebstoffe ist die Beschichtung von selbstklebenden Folien, Bändern oder Etiketten mit einer Klebstoffschicht. Dabei werden Bänder oder Folien, beispielsweise auf Basis von Polyolefinen oder Polyestern, mit dem erfindungsgemäß geeigneten Schmelzklebstoff beschichtet. Es wird in diesem Fall durch Auswahl eines entsprechenden Klebstoffs eine dauerhaft haftklebrige Schicht erhalten. Danach können diese Materialien konfektioniert werden. Auf diese Weise können dann dauerklebrige Folien, Etiketten und Bänder hergestellt werden. Die so erhaltenen selbstklebenden Oberflächen können gegebenenfalls durch anti-adhäsiv beschichtete Materialien abgedeckt werden.

Die erfindungsgemäßen Klebstoffe sind trüb. Bei Raumtemperatur ist eine Schicht von 1 cm Dicke undurchsichtig. Es findet aber kein Ausschwimmen von einzelnen Bestandteilen statt, damit wird auch die Klebekraft der nicht verklebten Schicht oder zu verklebten Substraten nicht vermindert. In der Schmelze sind erfindungsgemäße Klebstoffe stabil, es ergibt sich auch bei längerer Lagerung im geschmolzenen Zustand keine Phasentrennung. Die erfindungsgemäß verwendeten Klebstoffe zeigen eine gute Klebrigkeit. Dabei sind die Schichten elastisch und zeigen einen guten kohäsiven Zusammenhalt. Die beiden Blockcopolymere bilden eine stabile Mischung, die nicht zu einer Phasentrennung führt. Dabei wird eine hohe Adhäsion erhalten.

Die erfindungsgemäßen Klebstoffe sind als Beschichtung für Folienanwendung bekannt. Entsprechende beschichtetet Produkte können in vielen Anwendungsgebieten eingesetzt werden, beispielsweise als Klebebänder oder Etiketten, Mehrschichtfolien zur Anwendung als Verschlusssicherungen, für Verpackungen, in Hygieneprodukte oder in medizinischen Anwendungen.

### Beispiele:

### Beispiel 1:

| | | |
|---|---|---|
| 20 Teile | Ethylen/Octen-copolymer | (Infuse D 9808) OBC |
| 5 Teile | SBS | (Kraton D 1118) Styrolblock-Copolymer |
| 5 Teile | SIS | (Kraton D 1126) Stryrolblockcopolymer |
| 30 Teile | Harz | (Escorez 5320) |
| 10 Teile | Weichharz, | (Sylvatac RE12) flüssiges Harz |
| 20 Teile | naphthenisches Öl | (Nyflex 222B) |
| 1 Teile | Stabilisator | (Irganox B 225) Antioxidants |

Viskosität: 27500 mPas, 150°C
Viskosität: 15300 mPas, 170°C
Der Klebstoff ist fest oder geschmolzen in dünner Schicht trüb (visuelle Beurteilung).

Ein Trägerfilm (PE, 50µm) wird mit ca. 250 g beschichtet.
Nach dem Abkühlen wird ein Film auf eine Glasplatte geklebt, mit einer Rolle (1kg) angedrückt und 24 Std. bei 25°C gelagert. Danach wird in festgelegter Zeit die Klebkraft gemessen.

| | |
|---|---|
| 20 min | 50 N / 25 mm |
| 24 h | 60 N / 25mm |
| 3 d | 60 N / 25 mm |

Die Adhäsion bleibt konstant auch nach Lagerung, es findet kein Ausschwitzen der unverträglichen Komponenten statt.

### Vergleichsbeispiel 2:

| | | |
|---|---|---|
| 20 Teile | Ethylen/Octen-copolymer | (Infuse D 9808) OBC |
| 8 Teile | SBS | (Kraton D 1118) Styrolblock-Copolymer |
| 8 Teile | SIS | (Kraton D 1126) Stryrolblockcopolymer |
| 43,5 Teile | Harz | (Regalite R 1125) |
| 20 Teile | Polyisobutylene | (Parapol 1300) |
| 0,5 Teile | Stabilisator | (Irganox B 225) Antioxidants |

Viskosität: 51200 mPas, 170°C
Der Klebstoff ist fest oder geschmolzen in dünner Schicht trüb (visuelle Beurteilung).
Die Klebkraft einer beschichteten Folie ist gering (gemessen als loop tack, ASTM D6195).

### Vergleichsbeispiel 3:

| | | |
|---|---|---|
| 20 Teile | Ethylen/Octen-copolymer | (Infuse D 9808) OBC |
| 5 Teile | SBS | (Kraton D 1118) Styrolblock-Copolymer |
| 5 Teile | SIS | (Kraton D 1126) Stryrolblockcopolymer |
| 40 Teile | Harz | (Escorez 5320) |
| 10 Teile | Harz | (Foral 85) |
| 10 Teile | naphthenisches Öl | (Nyflex 222B) |
| 0,5 Teile | Stabilisator | (Irganox B 225) Antioxidants |

Viskosität: 42700 mPas, 150°C
Viskosität: 19200 mPas, 170°C
Die Klebkraft einer beschichteten Folie (loop tack) ist gering.

## Patentansprüche

1. Schmelzklebstoff enthaltend
- 15 bis 70 Gew.-% eines Gemischs aus mindestens einem Copolymeren auf Basis von Ethylen und/oder Propylen und mindestens einem C4 bis C20-α-Olefinen, das durch Metallocene-katalysierte Polymerisation als Blockcopolymer erhältlich ist, und mindestens eines Styrolblockcopolymeren,
- 10 bis 70 Gew.-% mindestens eines klebrigmachenden Harzes ,
- 0 bis 40 Gew.-% weitere Additive,
wobei die Summe der %- Anteile 100% ergeben soll und das klebrigmachende Harz ganz oder teilweise ein Weichharz ist, das bei einer Temperatur unter 50°C flüssig ist.

2. Schmelzklebstoff nach Anspruch 1, **dadurch gekennzeichnet, dass** die klebrigmachenden Weichharze einen Tropfpunkt unterhalb von 35 °C aufweisen.

3. Schmelzklebstoff nach einem der Ansprüche 1 oder 2, **dadurch gekennzeichnet, dass** die Styrolblockcopolymere ausgewählt werden aus nicht hydrierten Blockcopolymeren.

4. Schmelzklebstoff nach einem der Ansprüche 1 bis 3, **dadurch gekennzeichnet, dass** der Klebstoff bei Raumtemperatur trüb ist.

5. Schmelzklebstoff nach einem der Ansprüche 1 bis 4, **dadurch gekennzeichnet, dass** der Schmelzklebstoff eine Viskosität zwischen 3000 mPas und 50000 mPas (bei 150°C) aufweist.

6. Schmelzklebstoff nach einem der Ansprüche 1 bis 5, **dadurch gekennzeichnet, dass** als Weichmacher unpolare Weichmacher eingesetzt werden, insbesondere synthetische Öle, paraffinische Öle, naphthenische Öle oder Poly-Isobutylenöle.

7. Schmelzklebstoff nach Anspruch 3, **dadurch gekennzeichnet, dass** die Styrolblockcopolymere insbesondere SIS, SBS oder SIBS umfasst.

8. Schmelzklebstoff nach Anspruch 1, **dadurch gekennzeichnet, dass** 15 bis 30 Gew.-% Olefinblockcopolymere, 5 bis 35 Gew.-% eines Styrolblockcopolymeren, 5 bis 35 Gew.-% flüssige klebrigmachende Harz und 25 bis 0 Gew.-% Weichmacher enthalten sind.

9. Verwendung von Schmelzklebstoffen nach einem der Ansprüche 1 bis 8 als Haftklebstoff (pressure sensitive adhesive).

10. Verwendung nach Anspruch 11 zum Beschichten von Folien, Bändern oder Etiketten.

## Claims

1. A hot-melt adhesive containing
- 15 to 70 wt.% of a mixture of at least one copolymer based on ethylene and/or propylene, and at least one C4 to C20 α-olefin which can be obtained as a block copolymer by metallocene-catalyzed polymerization, and at least one styrene block copolymer,
- 10 to 70 wt.% of at least one tackifying resin,
- 0 to 40 wt.% of further additives,
wherein the sum of the percentages should be 100% and the tackifying resin is entirely or in part a soft resin which is liquid at a temperature below 50 °C.

2. The hot-melt adhesive according to claim 1, **characterized in that** the tackifying soft resins have a dropping point below 35 °C.

3. The hot-melt adhesive according to one of claims 1 or 2, **characterized in that** the styrene block copolymers are selected from non-hydrogenated block copolymers.

4. The hot-melt adhesive according to one of claims 1 to 3, **characterized in that** the adhesive is cloudy at room temperature.

5. The hot-melt adhesive according to one of claims 1 to 4, **characterized in that** the hot-melt adhesive has a viscosity between 3000 mPas and 50,000 mPas (at 150 °C).

6. The hot-melt adhesive according to one of claims 1 to 5, **characterized in that** non-polar plasticizers, in particular synthetic oils, paraffinic oils, naphthenic oils or polyisobutylene oils, are used as plasticizers.

7. The hot-melt adhesive according to claim 3, **characterized in that** the styrene block copolymers in particular include SIS, SBS or SIBS.

8. The hot-melt adhesive according to claim 1, **characterized in that** 15 to 30 wt.% olefin block copolymers, 5 to 35 wt.% of a styrene block copolymer, 5 to 35 wt.% liquid tackifying resin and 25 to 0 wt.% plasticizer are contained.

9. The use of hot-melt adhesives according to one of claims 1 to 8 as a pressure-sensitive adhesive.

10. The use according to claim 11 for coating films, tapes or labels.

## Revendications

1. Adhésif thermofusible contenant
- 15 à 70 % en poids d'un mélange d'au moins un copolymère à base d'éthylène et/ou de propylène et d'au moins une α-oléfine en C4 à C20, pouvant être obtenu sous forme de copolymère bloc par polymérisation catalysée de métallocènes, et d'au moins un copolymère bloc styrénique,
- 10 à 70 % en poids d'au moins une résine tackifiante,
- 0 à 40 % en poids d'autres additifs,
dans lequel la somme des pourcentages doit être de 100 % et la résine tackifiante est entièrement ou partiellement une résine molle liquide à une température inférieure à 50 °C.

2. Adhésif thermofusible selon la revendication 1, **caractérisé en ce que** les résines molles tackifiantes présentent un point d'égouttement inférieur à 35 °C.

3. Adhésif thermofusible selon l'une des revendications 1 ou 2, **caractérisé en ce que** les copolymères blocs styréniques sont choisis parmi les polymères blocs non hydrogénés.

4. Adhésif thermofusible selon l'une des revendications 1 à 3, **caractérisé en ce que** l'adhésif est opaque à température ambiante.

5. Adhésif thermofusible selon l'une des revendications 1 à 4, **caractérisé en ce que** l'adhésif thermofusible présente une viscosité comprise entre 3 000 mPas et 50 000 mPas (à 150 °C).

6. Adhésif thermofusible selon l'une des revendications 1 à 5, **caractérisé en ce que** des plastifiants non polaires sont utilisés comme plastifiants, en particulier des huiles synthétiques, des huiles paraffiniques, des huiles naphténiques ou des huiles de polyisobutylène.

7. Adhésif thermofusible selon la revendication 3, **caractérisé en ce que** les copolymères blocs styréniques comprennent en particulier le SIS, le SBS ou le SIBS.

8. Adhésif thermofusible selon la revendication 1, **caractérisé en ce qu'**il contient 15 à 30 % en poids de copolymères blocs oléfiniques, 5 à 35 % en poids d'un copolymère bloc styrénique, 5 à 35 % en poids de résine tackifiante liquide et 25 à 0 % en poids de plastifiant.

9. Utilisation d'adhésifs thermofusibles selon l'une des revendications 1 à 8 en tant qu'adhésif de contact sensible à la pression (« pressure sensitive adhesive »).

10. Utilisation selon la revendication 11 pour le revêtement de films, de bandes ou d'étiquettes.
